(19) Europäisches Patentamt
European Patent Office
Office européen des brevets

(11) **EP 1 817 613 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(21) Anmeldenummer: **05802299.7**

(22) Anmeldetag: **11.11.2005**

(51) Int Cl.:
*G01V 8/10* (2006.01)        *G01C 11/02* (2006.01)
*G08B 17/12* (2006.01)

(86) Internationale Anmeldenummer:
**PCT/EP2005/012352**

(87) Internationale Veröffentlichungsnummer:
**WO 2006/058618 (08.06.2006 Gazette 2006/23)**

(54) **VERFAHREN UND SATELLIT ZUR ERKENNUNG VON HEISSEN ZIELEN AM ERDBODEN**

METHOD AND SATELLITE FOR RECOGNISING HOT TARGETS ON THE EARTH

PROCEDE ET SATELLITE POUR IDENTIFIER DES POINTS CHAUDS SUR LA TERRE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.11.2004 DE 102004057855**

(43) Veröffentlichungstag der Anmeldung:
**15.08.2007 Patentblatt 2007/33**

(73) Patentinhaber: **DLR Deutsches Zentrum für Luft- und Raumfahrt e.V.
51147 Köln (DE)**

(72) Erfinder:
• **OERTEL, Dieter
15910 Schoenwald (DE)**
• **JAHN, Herbert
12487 Berlin (DE)**
• **LORENZ, Eckehard
12621 Berlin (DE)**
• **BAERWALD, Wolfgang
12527 Berlin (DE)**
• **HALLE, Winfried
12163 Berlin (DE)**
• **VENUS, Holger
12557 Berlin (DE)**
• **TERZIBASCHIAN, Thomas
13088 Berlin (DE)**
• **ZHUKOV, Boris
Mytischtchi, 141002 (RU)**

(74) Vertreter: **Zucker, Volker
Bressel und Partner
Patentanwälte
Park Kolonnaden
Potsdamer Platz 10
10785 Berlin (DE)**

(56) Entgegenhaltungen:
EP-A- 0 892 286        FR-A- 2 679 779
US-A1- 2002 026 431    US-B1- 6 281 970

EP 1 817 613 B1

**Beschreibung**

Die Erfindung betrifft ein Verfahren zur Erkennung von heißen Zielen am Erdboden sowie mindestens einen hierfür geeigneten Satelliten und mindestens eine hierfür geeignete Empfangseinheit.

Hochtemperaturereignisse auf der Erdoberfläche verursachen sehr oft Umweltkatastrophen. Solche Hochtemperaturereignisse sind Wald- und Savannenbrände, Brände von Tagebaukohlegruben, Vulkantätigkeiten und anderes (z.B. Brände von Ölquellen, Pipelines usw.). Eine ganz wesentliche Vorbedingung für die Ermittlung von Ereignisparametern wie z.B. Temperatur, Ausmaß und Lage ist die zuverlässige Ferndetektion der Hochtemperaturereignisse als "heiße Zielobjekte" an Bord von Flugzeugen oder Raumflugkörpern. Ferndetektion heißer Zielobjekte an Bord von Flugzeugen ist hauptsächlich im lokalen oder regionalen Maßstab möglich. An Bord von Raumflugkörpern befindliche Erkennungssysteme für Hochtemperaturereigniskatastrophen können im globalen und regionalen Maßstab arbeiten. Es werden neue Datenauswertungsverfahren an Bord benötigt, für welche die vorhandenen Sensoren auf Raumflugkörpern und Flugzeugen, wie sie z.B. aus US-A-5 602 543 bekannt sind, nicht sorgen können.

Zur Erkennung von heißen Zielen (Hot Spots) auf der Erdoberfläche sind verschiedene Ansätze bekannt.

Aus der DE 198 40 873 A1 ist beispielsweise ein Verfahren und eine Vorrichtung zur automatischen Waldbranderkennung bekannt. Nachteilig an solchen stationären bodengebundenen Systemen ist, dass diese das Feuer horizontal beobachten, d.h. nur die Rauchfahne eines Feuers wird detektiert. Diese Systeme sind vorrangig auf die frühe Erkennung von Bränden ausgelegt, nicht jedoch auf die Gewinnung von Informationen zu Intensität, effektiver Fläche und effektiver Temperatur.

Aus der EP 0 892 286 A1 ist ein Verfahren zur adaptiven und kombinierten Schwellenwertverarbeitung für Feuererkennung über Tag von heißen Zielen am Erdboden bekannt. Mittels des dort beschriebenen Verfahrens ist eine hohe Zulässigkeit der Erkennung von heißen Zielen möglich. Dabei werden die vorzugsweise von einem oder mehreren Satelliten erfassten IR-Daten an eine Bodenstation übertragen und dort verfahrensgemäß ausgewertet. Die dann noch graphisch aufbereiteten Daten werden danach beispielsweise per Internet interessierenden Dritten zur Verfügung gestellt. Nachteilig an den bekannten satellitengestützten Systemen ist, dass diese aufgrund der personellen als auch technischen Vorhaltungen in der Bodenstation relativ teuer sind. Des Weiteren tritt ein nicht unerheblicher Zeitverzug zwischen der IR-Daten-Erfassung bis zur Bereitstellung aufbereiteter Daten für Dritte auf.

Aus dem Fachartikel "BIRD Detection and Analysis of High-temperature Events: First Results": Zhukov et al, proc. SPIE, 2003, vol. 4886, 160 - 171, ist ein weiteres mehrkanaliges Schwellenverfahren zur Detektion heißer Ziele bekannt, auf deren Offenbarung hiermit ausdrücklich Bezug genommen wird.

Aus der US-A-2002/0026431 ist ein Verfahren und ein Satellit zur Erkennung von heißen Zielen bekannt, wobei heiße Ziele anhand von einem IR-Spektrum erfasster Signale detektiert und mittels der Lagedaten des Satelliten georeferenziert werden. Die heißen Ziele werden an eine auf der Erde befindliche Empfangseinheit übertragen und dort graphisch dargestellt.

Aus der FR-A-2 679 779 ist eine Empfangseinheit für detektierte heiße Ziele bekannt, wobei diese Empfangseinheit als mobiler, tragbarer GPS-Empfänger ausgebildet ist, umfassend einen weiteren HF-Empfänger für HF-Signale eines Flugzeuges zur Erkennung von heißen Zielen, einen Decoder für die empfangenen HF-Signale, ein Interface zur digitalen Kartensoftware des GPS-Empfängers und ein Anzeigedisplay, wobei das Anzeigedisplay als Zusatzteil angeschlossen ist, wobei die Empfangseinheit dafür geeignet ist, erfasste georeferenzierte heiße Ziele, die über die HF-Signale an die Empfangseinheit übertragen werden, in der digitalen Karte der Umgebung darzustellen, wobei zusätzlich die geographische Länge und Breite des heißen Ziels dargestellt wird.

Der Erfindung liegt daher das technische Problem zugrunde, ein Verfahren zur Erkennung von heißen Zielen am Erdboden bereitzustellen, mittels dessen einfacher und schneller aufbereitete Daten der heißen Ziele zur Verfügung gestellt werden können sowie hierfür einen geeigneten Satelliten zu schaffen.

Die Lösung des technischen Problems ergibt sich durch die Gegenstände mit den Merkmalen der Patentansprüche 1 und 9. Weitere vorteilhafte Ausgestaltungen der Erfindung ergeben sich aus den Unteransprüchen.

Hierzu wird zunächst eine Systemkorrektur der erfassten Daten in den verschiedenen Spektralkanälen mittels auf dem Satelliten gespeicherter radiometrischer und geometrischer Kalibrationsfiles durchgeführt. Diese Kalibrationsfiles werden während der Laborkalibrierung der Sensoren am Boden erzeugt und vorzugsweise während des Fluges fortlaufend angepasst. Anschließend werden in den systemkorrigierten Daten heiße Ziele an Bord in einem mehrkanaligen Schwellenverfahren ermittelt. Dabei kommt beispielsweise ein mehrkanaliges Schwellenverfahren zur Anwendung, wie dies in der EP 0 892 286 A1 oder in dem Fachartikel "BIRD Detection and Analysis of High-temperature Events: First Results" beschrieben ist, wobei auf deren Offenbarung Bezug genommen wird. Diese so ermittelten potentiellen heißen Ziele werden mittels der Lage- und Orientierungsdaten des Satelliten sowie des geometrischen Kalibrationsfiles georeferenziert und zwischengespeichert. Diese "Hot-Spot-Informationen" können dann mittels der Sendeeinheit an die Erde übertragen werden. Dieser Datensatz kann dann direkt von einer vorzugsweise mobilen Empfangseinheit empfangen und dekodiert werden. Die dekodierten Daten können dann graphisch digital aufbereitet werden, wozu diese beispielsweise in eine vorhandene digitale Karte der Umgebung der Empfängerstation eingeblendet werden. Der Grundgedanke der Erfindung besteht also darin, wesentliche Teilschritte der Erkennung on-board von Satelliten durchzuführen, so dass diese nur noch potentielle heiße Ziele georeferenziert übertragen müssen. Für diese kleinen Datenmengen kann dann eine frequenzmodulierte Hoch-Frequenz Broadcast-Übertragung mit geringer Datenrate zur Erde verwendet werden. Da die übertragenen Daten bereits georeferenziert sind, können diese (ohne Zwischenschaltung einer auswertenden und ortsfesten Bodenstation) direkt empfangen und ausgewertet werden. Hierzu wird ein mobiler, tragbarer GPS-Empfänger mit einem HF-Empfänger für die HF-Broadcast-Übertragung als mobile Empfangseinheit ausgebildet. Die Datenpakete werden dort in einem Decoder dekodiert und über eine geeignete Schnittstelle in eine digitale Karte des GPS-Empfängers eingeschrieben und zur geeigneten Anzeige gebracht.

Vorzugsweise werden die IR-Daten mindestens in den Spektralbändern MIR (Mittleres Infrarot), TIR (Thermisches Infrarot), und VNIR (sichtbares Nahes Infrarot) erfasst. Der MIR-Kanal liegt dabei im 3 - 5$\mu$m-Spektralbereich, vorzugsweise im Bereich von 3,5 - 4,2 $\mu$m. Der TIR-Kanal liegt dabei im Bereich von 8 - 13 $\mu$m, vorzugsweise im Bereich von 8,5 - 9,3 $\mu$m. Der VNIR-Kanal liegt dabei im Bereich von 0,4 - 1,0 $\mu$m, vorzugsweise im Bereich von 0,5 - 0,7 $\mu$m.

In einer weiteren bevorzugten Ausführungsform wird den erfassten IR-Daten auf den Satelliten ein Zeitstempel zugeordnet, der bei der Broadcast-Übertragung mit übertragen wird.

In einer weiteren bevorzugen Ausführungsform kommt bei der Detektion der heißen Ziele ein Verfahren mit folgenden Schritten zur Anwendung, wie es auch in der EP 0 892 286 A1 beschrieben ist:

- Detektion der hellen Stellen durch eine adaptive Schwellenwertbildung im mittleren Infrarot (MIR), wobei die feuerfreien Pixel mit der spezifischen MIR-Strahlung unterhalb des Schwellenwertes gemäß einem Wanderfenster-Algorithmus für die Detektion von hellen Stellen bei den MIR-Kanal-Bilddaten durch Berechnung des Medians $g_{med}^{MIR}$ und der Abweichung

$$d^{MIR} = \frac{1}{N} \sum_{i=1}^{N} \left| g_i^{MIR} - g_{med}^{MIR} \right| \qquad \text{(M1)}$$

für jede Wanderfenster-Box der MIR-Bilder zurückgewiesen werden, wobei N die Anzahl der Pixel in der Box ist, $g_i^{MIR}$ ihre Strahlungssignale sind, und ein Pixel als eine helle Stelle identifiziert wird, wenn

$$g_i^{MIR} > g_{med}^{MIR} + \Delta g^{MIR}, \qquad \text{(M2)}$$

wobei der Schwellenwert $\Delta g^{MIR}$, über den Median $g_{med}^{MIR}$ der Abweichung $d^{MIR}$ angepasst und zu dieser proportional ist:

$$\Delta g^{MIR} = \alpha^{MIR} \cdot d^{MIR}, \qquad \text{(M3)}$$

mit dem unter der Bedingung gewählten Parameter $\alpha^{MIR}$, dass später ein kombinierter MIR/VNIR-Strahlungsverhältnis-Schwellenwert für eine Falschalarmzurückweisung verwendet wird (Schritt 1);

- drei aufeinanderfolgende Verarbeitungsprozeduren, die für jede helle Stelle, wie sie im vorhergehenden Schritt S1 der koregistrierten multispektralen Szene erhalten wird, ausgeführt werden, wobei sowohl feste als auch adaptive Schwellenwertbildungsoperationen mit ihren radiometrischen Daten im Kanal des thermischen Infrarots (TIR) in Kombination mit einer Schwellenwertoperation unter Benutzung eines Verhältnisses der radiometrischen Daten im MIR-Kanal zu den radiometrischen Daten in einem Kanal des Sichtbaren/Nahen Infrarot (VNIR) vorgesehen sind (Schritt S2), wobei diese kombinierten Prozeduren aus den folgenden Unterschritten bestehen:

  - Unterschritt SS2.1: Eine feste Schwellenwertbildung im TIR, wobei verlangt wird, dass die aus den systemkorrigierten Sensordaten für alle hellen Stellen berechnete Strahlungstemperatur die Strahlung entsprechend einer Schwellenwert-Temperatur (von z. B. 250 K) übertreffen sollte, um Wolkenpixel auszuschalten;

  - Unterschritt SS2.2: Ein adaptiver MIRNNIR-Verhältnis-Schwellenwert thres$_{MIR/VNIR}$ wird auf alle verbleibende helle Stellen angewandt, was dazu führt, dass alle hellen Stellen mit einem MIR/VNIR-Kanal-Strahlungsverhältnis, das kleiner als thres$_{MIR/VNIR}$ ist, als Falschalarm ausgefiltert werden;

- Unterschritt SS2.3: Einer adaptiven TIR-Schwellenwertoperation werden alle verbleibenden hellen Stellen in einer Wanderfensterprozedur durch eine adaptive TIR-Schwellenwertbildung unterzogen, wobei feuerfreie Falschalarm-Pixel mit der TIR-Strahlung unterhalb eines Schwellenwerts, ermittelt durch Berechnung des Medians $g_{med}^{TIR}$ und der Abweichung

$$d^{TIR} = \frac{1}{N} \sum_{i=1}^{N} \left| g_i^{TIR} - g_{med}^{TIR} \right| \qquad\qquad (T1)$$

für jede Wanderfenster-Box des TIR-Bildes, zurückgewiesen werden, wobei N die Anzahl der Pixel in der Box ist, $g_i^{TIR}$ ihre Strahlungssignale sind, und ein Pixel als eine helle Stelle identifiziert wird, wenn

$$g_i^{TIR} > g_{med}^{TIR} + \Delta g^{TIR}, \qquad\qquad (T2)$$

wobei der Schwellenwert $\Delta g^{TIR}$ über den Median so gewählt ist, dass eine zusätzliche Zurückweisung kleiner heißer Zielobjekte vermieden wird.

In einer alternativen Ausführungsform erfolgt das mehrkanalige Schwellenverfahren gemäß den in "BIRD Detection and Analysis of High-temperature Events: First Results, chapter 2: HOTSPOT DETECTION AND ANALYSIS ALGORITHM" beschriebenen Verfahren. Dieses Verfahren ist insbesondere wegen der geringen Rechenleistung zu bevorzugen.

In einer weiteren bevorzugten Ausführungsform wird die Intensität der heißen Ziele durch eine Schätzung der Strahlungsleistung aus dem Signal des MIR-Kanals gewonnen.

In einer weiteren bevorzugten Ausführungsform werden die effektive Temperatur und die effektive Fläche der heißen Ziele ermittelt, wobei danach aus diesen Werten eine Stsablungsleistung berechnet wird. Dies erfolgt beispielsweise wie in der

EP 0 892 286 A1 unter (OS3) beschrieben. Es erfolgt vorzugsweise eine Berechnung der effektiven Temperatur und der effektiven Fläche der heißen Ziele nur, wenn die zuvor geschätzte Intensität größer als ein vorgebbarer Grenzwert ist. Alternativ können auch hier die in "BIRD Detection and Analysis of High-temperature Events: First Results" beschriebenen Ansätze Anwendung finden.

Die Erfindung wird nachfolgend anhand eines bevorzugten Ausführungsbeispieles näher erläutert. Die Fig. zeigen:

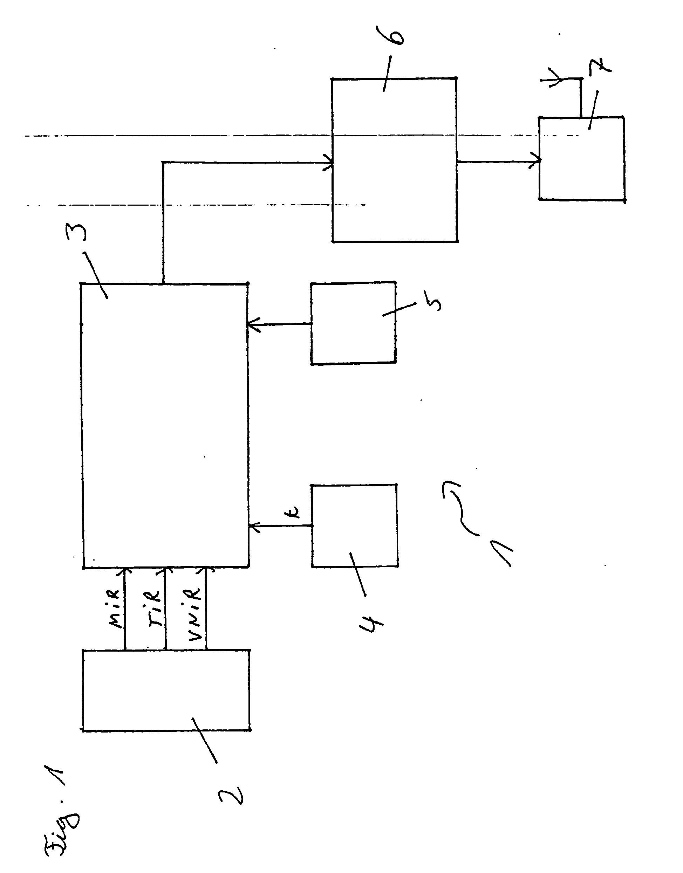

Fig. 1    ein schematisches Blockschaltbild einer Vorrichtung an Bord von Satelliten zur Erkennung von heißen Zielen am Erdboden und

Fig. 2    ein schematisches Blockschaltbild der mobilen, tragbaren Empfangseinheit.

Die Vorrichtung 1 zur Erkennung von heißen Zielen am Erdboden ist Bestandteil mehrerer oder eines Satelliten, der sich beispielsweise auf einer polaren sonnensynchronen Erdumlaufbahn in ca. 700 km Höhe befindet. Die Vorrichtung 1 umfasst eine IR-Sensorik 2, die beispielsweise als IR-Kamera ausgebildet ist, eine Auswerteeinheit 3, ein On-board-Navigationssystem 4, eine nicht dargestellte Zeiterfassungseinrichtung, einen Speicher 5 mit radiometrischen und geometrischen Kalibrationsfiles, einen Massenspeicher 6 und eine Sendeeinheit 7.

Die IR-Sensorik 2 erfasst IR-Daten in den Spektralbereichen MIR, TIR und VNIR, wobei die erfassten Daten der Auswerteeinheit 3 zugeführt werden, wo mittels der Kalibrationsfiles aus dem Speicher 5 eine Systemkorrektur durchgeführt wird. Der Auswerteeinheit 3 werden darüber hinaus eine Zeitangabe t und Lage- und Orientierungsdaten von der On-board-Navigationseinrichtung 4 zugeführt. In der Auswerteeinheit 3 erfolgt dann eine Detektion in Echtzeit in einem mehrkanaligen Schwellenverfahren, welches eine Falscharmfilterung einschließt. Weiter erfolgt für detektierte heiße Ziele eine quantitative Bewertung der Intensität der heißen Ziele durch eine Schätzung der Strahlungsleistung aus dem Signal des MIR-Kanals. Übersteigt die so ermittelte Intensität einen vorgebbaren Grenzwert, so wird zusätzlich die effektive Temperatur und die effektive Fläche des heißen Ziels bestimmt sowie eine Berechnung der Strahlungsleistung des heißen Ziels aus dessen effektiver Temperatur und effektiver Fläche durchgeführt. Anschließend werden die ermittelten Daten des heißen Ziels noch georeferenziert, wobei hierzu die Daten des On-board-Navigationssystems 4 sowie die geometrischen Kalibrationsfiles benutzt werden. Die georeferenzierten Daten werden dann in den Massenspeicher 6 geschrieben und sukzessive von der Sendeeinheit 7 ausgelesen. Die Sendeeinheit 7 führt dann eine Frequenzmodulation durch und überträgt die Daten als HF Broadcast-Übertragung mit geringer Datenrate zur Erde.

Das On-board-Navigationssystem 4 besteht vorzugsweise aus einem satellitentauglichen GPS-Empfänger, einer Inertial-Measurement Unit sowie mindestens einem Sternsensor. Der Sternsensor, der vorzugsweise als Kamera ausgebildet ist, erfasst Sternbilder, die mit gespeicherten Sternenkarten im Sternensensor verglichen werden. Mit Hilfe der im Sternsensor generierten Quaternionen wird die Orientierung von Satellit und multispektraler IR-Sensorik im On-board-Navigationssystem 4 aktualisiert. Es kann damit die IMU kalibriert werden, insbesondere bei einem Wiedereinschalten nach einer Systemabschaltung. Des Weiteren umfasst das On-board-Navigationssystem 4 eine Recheneinheit zum Zusammenführen der einzelnen Navigationsdaten sowie eine Telemetrie/Kommando-Empfangs- und Sendeeinheit, mittels derer der Satellit mit einer Bodenstation kommunizieren kann und über die beispielsweise auch die im Speicher 5 abgelegten Kalibrationsfiles anpassbar sind. Primär wird in dem On-board-Navigationssystem 4 jedoch ein Orientierungs- und Positionsabgleich vorgenommen.

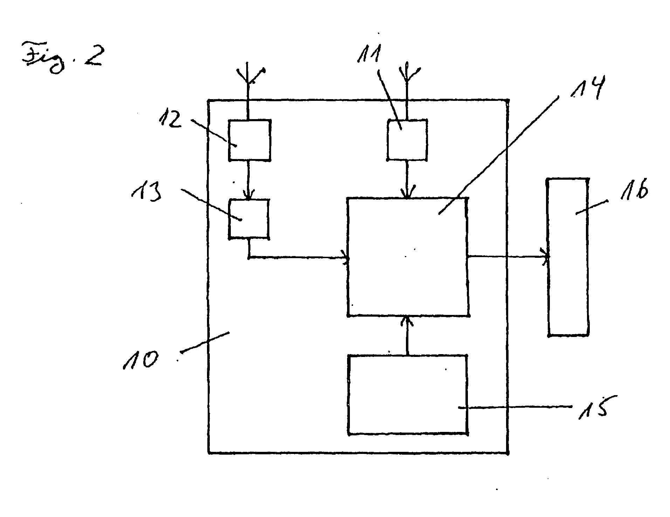

In der Fig. 2 ist ein schematisches Blockschaltbild einer mobilen, tragbaren Empfangseinheit 10 für die HF-Broadcast-Nachrichten des Satelliten dargestellt. Die Empfangseinheit 10 umfasst einen GPS-Empfänger 11, einen HF-Empfänger 12 für die HF-Broadcast-Nachrichten des Satelliten, einen Decoder 13, einen Prozessor 14, einen Speicher 15 für digitale Karten sowie ein Anzeigedisplay 16. Über den GPS-Empfänger 11 werden, wie bekannt, Signale von GPS-Satelliten erfasst und aus diesen Signalen die Position am Ort der Empfangseinheit bestimmt. Diese Position wird dem Prozessor 14 ebenso wie die dekodierten HF-Broadcast-Nachrichten übermittelt. In dem Speicher 15 ist eine digitale Karte der Umgebung abgelegt, wobei die Daten in Form eines Datenträgers oder online zur Verfügung gestellt werden können. Die Visualisierung der heißen Ziele erfolgt auf dem Anzeigedisplay 16, das entweder in der Empfangseinheit 10 integriert ist oder als Zusatzteil anschließbar ist. Die georeferenzierten heißen Ziele werden dann auf der digitalen Karte der Umgebung dargestellt. Vorzugsweise werden dabei noch folgende Angaben dargestellt:

- geografische Länge und Breite (mit Toleranzen, abhängig vom Fehler der Daten des On-board-Navigationssystems, der Höhe des momentanen Empfangsortes über dem Meeresspiegel u.a.),

- Registrierzeit,

- Intensität sowie bei hoher Intensität auch effektive Fläche und effektive Temperatur (mit Toleranzen, abhängig von der Größe und Intensität des heißen Ziels),

- Länge und Breite vom momentanen Standort des Empfängers, d. h. der Empfangseinheit.

Bezugszeichenliste

1    Vorrichtung
2    IR-Sensorik
3    Auswerteeinheit
4    On-board-Navigationssystem
5    Speicher der Kalibrationsfiles
6    Massenspeicher
7    Sendeeinheit
10    Empfangseinheit
11    GPS-Empfänger
12    HF-Empfänger
13    Decoder
14    Prozessor
15    Speicher der digitalen Karten
16    Anzeigedisplay

**Patentansprüche**

1. Verfahren zur Erkennung von heißen Zielen am Erdboden, mittels mindestens eines Satelliten, wobei der Satellit mindestens einen Sensor zur Erfassung verschiedener Spektralkanäle im IR-Spektrum, ein On-board-Navigationssystem zur Erfassung der Lage- und Orientierungsdaten des Satelliten sowie eine Sendeeinheit zur Übertragung von Daten an auf der Erde befindliche Empfangseinheiten umfasst,
**gekennzeichnet durch** folgende Verfahrensschritte:

   a) Durchführen einer Systemkorrektur der erfassten Daten in den verschiedenen Spektralkanälen mittels auf dem Satelliten gespeicherter radiometrischer und geometrischer Kalibrationsfiles,
   b) Detektieren der heißen Ziele an Bord in einem mehrkanaligen Schwellenverfahren,
   c) Georeferenzieren der erfassten heißen Ziele mittels der Lage- und Orientierungsdaten des Satelliten und der geometrischen Kalibrationsfiles,
   d) Zwischenspeichern der georeferenzierten erfassten heißen Ziele auf dem Satelliten,
   e) Übertragen der zwischengespeicherten Ziele mittels der Sendeeinheit und
   f) Empfangen, Demodulieren, Dekodieren und graphisch Darstellen der übertragenen Ziele in mindestens einer Empfangseinheit, die die Integration der geographischen Längen und Breiten des momentanen Standortes dieser Einheit(en) in die graphische Darstellung der heißen Ziele durchführt.

2. Verfahren nach Anspruch 1, **dadurch gekennzeichnet, dass** mindestens Daten in den Spektralbändern MIR, TIR und VNIR erfasst werden.

3. Verfahren nach Anspruch 2, umfassend wenigstens:

   a) einen MIR-Kanal im 3 - 5 $\mu$m-Spektralbereich,
   b) einen TIR-Kanal im 8 - 13 $\mu$m-Spektralbereich und
   c) einen VNIR-Kanal im 0,4 - 1,0 $\mu$m-Spektralbereich.

4. Verfahren nach Anspruch 3, umfassend wenigstens:

   a) einen MIR-Kanal im 3,5 - 4,2 $\mu$m-Spektralbereich,
   b) einen TIR-Kanal im 8,5 - 9,3 $\mu$-Spektralbereich und
   c) einen VNIR-Kanal im 0,5 - 0,7 $\mu$m-Spektralbereich.

5. Verfahren nach einem der vorangegangenen Ansprüche, **dadurch gekennzeichnet, dass** den erfassten heißen Zielen ein Zeitstempel der Erfassung zugeordnet wird.

6. Verfahren nach einem der vorangegangenen Ansprüche, **dadurch gekennzeichnet, dass** die Detektion der heißen Ziele die Anwendung der folgenden Schritte auf digitale Bilddaten, die potentiell heiße Zielobjekte enthalten, umfasst:

   a) Detektion der hellen Stellen durch eine adaptive Schwellenwertbildung im mittleren Infrarot (MIR), wobei die feuerfreien Pixel mit der spezifischen MIR-Strahlung unterhalb des Schwellenwertes gemäß einem Wanderfenster-Algorithmus für die Detektion von hellen Stellen bei den MIR-Kanal-Bilddaten durch Berechnung des Medians $g_{med}^{MIR}$ und der Abweichung

$$d^{MIR} = \frac{1}{N} \sum_{i=1}^{N} \left| g_i^{MIR} - g_{med}^{MIR} \right| \qquad \text{(M1)}$$

für jede Wanderfenster-Box der MIR-Bilder zurückgewiesen werden, wobei N die Anzahl der Pixel in der Box ist, $g_i^{MIR}$ ihre Strahlungssignale sind, und ein Pixel als eine helle Stelle identifiziert wird, wenn

$$g_i^{MIR} > g_{med}^{MIR} + \Delta g^{MIR}, \qquad \text{(M2)}$$

wobei der Schwellenwert $\Delta g^{MIR}$ über den Median $g_{med}^{MIR}$ der Abweichung $d^{MIR}$ angepasst und zu dieser proportional ist:

$$\Delta g^{MIR} = \alpha^{MIR} \cdot d^{MIR}, \qquad\qquad (M3)$$

mit dem unter der Bedingung gewählten Parameter $\alpha^{MIR}$, dass später ein kombinierter MIR/VNIR-Strahlungsverhältnis-Schwellenwert für eine Falschalarmzurückweisung verwendet wird (Schritt 1);

b) drei aufeinanderfolgende Verarbeitungsprozeduren, die für jede helle Stelle, wie sie im vorhergehenden Schritt S1 der koregistrierten multispektralen Szene erhalten wird, ausgeführt werden, wobei sowohl feste als auch adaptive Schwellenwertbildungsoperationen mit ihren radiometrischen Daten im Kanal des thermischen Infrarots (TIR) in Kombination mit einer Schwellenwertoperation unter Benutzung eines Verhältnisses der radiometrischen Daten im MIR-Kanal zu den radiometrischen Daten in einem Kanal des Sichtbaren/Nahen Infrarot (VNIR) vorgesehen sind (Schritt S2), wobei diese kombinierten Prozeduren aus den folgenden Unterschritten bestehen:

b1) Unterschritt SS2.1: Eine feste Schwellenwertbildung im TIR, wobei verlangt wird, dass die aus den systemkorrigierten Sensordaten für alle hellen Stellen berechnete Strahlungstemperatur die Strahlung entsprechend einer Schwellenwert-Temperatur sein sollte, um Wolkenpixel auszuschalten;

b2) Unterschritt SS2.2: Ein adaptiver MIR/VNIR-Verhältnis-Schwellenwert $thres_{MIR/VNIR}$ wird auf alle verbleibende helle Stellenangewandt, was dazu führt, dass alle hellen Stellen mit einem MIR/VNIR-Kanal-Strahlungsvefiältnis, das kleiner als $thres_{MIR/VNIR}$ ist, als Falschalarm ausgefiltert werden;

b3) Unterschritt SS2.3: Einer adaptiven TIR-Schwellenwertoperation werden alle verbleibenden hellen Stellen in einer Wanderfensterprozedur durch eine adaptive TIR-Schwellenwertbildung unterzogen, wobei feuerfreie Falschalarm-Pixel mit der TIR-Strahlung unterhalb eines Schwellenwerts, ermittelt durch Berechnung des Medians $g_{med}^{TIR}$ und der Abweichung

$$d^{TIR} = \frac{1}{N} \sum_{i=1}^{N} \left| g_i^{TIR} - g_{med}^{TIR} \right| \qquad\qquad (T1)$$

für jede Wanderfenster-Box des TIR-Bildes, zurückgewiesen werden, wobei N die Anzahl der Pixel in der Box ist, $g_i^{TIR}$ ihre Strahlungssignale sind, und ein Pixel als eine helle Stelle identifiziert wird, wenn

$$g_i^{TIR} > g_{med}^{TIR} + \Delta g^{TIR}, \qquad\qquad (T2)$$

wobei der Schwellenwert $\Delta g^{TIR}$ über den Median so gewählt ist, dass eine zusätzliche Zurückweisung kleiner heißer Zielobjekte vermieden wird.

7. Verfahren nach einem der vorangegangenen Ansprüche, **dadurch gekennzeichnet, dass** die Intensität der heißen Ziele durch eine Schätzung der Strahlungsleistung aus dem Signal des MIR-Kanals gewonnen wird.

8. Verfahren nach einem der vorangegangenen Ansprüche, **dadurch gekennzeichnet, dass** die effektive Temperatur und die effektive Fläche der heißen Ziele ermittelt wird, wobei aus diesen Werten eine Strahlungsleistung der heißen Ziele berechnet wird.

9. Satellit zur Erkennung von heißen Zielen, umfassend mindestens einen Sensor zur Erfassung verschiedener Spektralkanäle im IR-Spektrum, ein On-board-Navigationssystem zur Erfassung der Lage- und Orientierungsdaten des Satelliten, eine Auswerteeinheit (3) sowie eine Sendeeinheit zur Übertragung von Daten an eine auf der Erde befindliche Empfängerstation,
**dadurch gekennzeichnet, dass**

für die erfassten Daten in den verschiedenen Spektralkanälen mittels auf dem Satelliten gespeicherter radiometrischer und geometrischer Kalibrationsfiles eine Systemkorrektur von der Auswerteeinheit (3) durchführbar ist, die systemkorrigierten Daten der Auswerteeinheit (3) verfügbar sind, in der heiße Ziele an Bord mittels eines mehrkanaligen Schwellenverfahrens detektierbar und mittels der Daten des On-board-Navigationssystems (4) und der geometrischen Kalibrationsfiles georeferenzierbar sind, wobei die georeferenzierten erfassten heißen Ziele auf dem Satelliten im Massenspeicher (6) zwischengespeichert werden und nacheinander mittels der Sendeeinheit (7) als moduliertes HF-Signal an die Erde übertragen werden.

**Claims**

1. Method for detecting hot targets on Earth by means of at least one satellite, the satellite comprising at least one sensor for acquiring various spectral channels in the IR spectrum, an on-board navigation system for detecting the positional and orientational data of the satellite, and a transmission unit for transmitting data to receiving units on Earth, **characterised by** the following method steps:

   a) performing a system correction of the acquired data in the various spectral channels by means of radiometric and geometric calibration files stored on the satellite;
   b) on-board detection of hot targets using multi-channel thresholding;
   c) geo-referencing the acquired hot targets on the basis of the positional and orientational data of the satellite and the geometric calibration files;
   d) temporarily storing the geo-referenced acquired hot targets on the satellite;
   e) transmission of the temporarily stored targets by the transmission unit; and
   f) receiving, demodulating, decoding and graphically displaying the transmitted targets[1] in at least one receiving unit which integrates the geographical longitude and latitude data of the instantaneous location of these unit(s) into the graphic display of the hot targets.

2. Method according to claim 1, **characterised in that** at least data in the MIR, TIR and VNTR spectral channels is acquired.

3. Method according to claim 2, comprising at least:

   a) one MIR channel in the spectral range of 3 - 5 $\mu$m;
   b) one TIR channel in the spectral range of 8 - 13 $\mu$m; and
   c) one VNIR channel in the spectral range of 0.4 - 1.0 $\mu$m.

4. Method according to claim 3, comprising at least:

   a) one MIR channel in the spectral range of 3.5 - 4.2 $\mu$m;
   b) one TIR channel in the spectral range of 8.5 - 9.3 $\mu$m; and
   c) one VNIR channel in the spectral range of 0.5 - 0.7 $\mu$m.

5. Method according to one of the preceding claims, **characterised in that** a detection time stamp is assigned to the acquired hot targets.

6. Method according to one of the preceding claims, **characterised in that** the detection of the hot targets comprises the application of the following steps to digital image data which contains potential hot target objects:

   a) Detection of hot spots by adaptive thresholding in the mid-infrared range (MIR), where fire-free pixels with a specific MIR radiance below a threshold value are rejected according to a moving window algorithm for detection of hot spots in the MIR channel image data by calculation of a median $g_{med}^{MIR}$ and a deviation:

$$d^{MIR} = \frac{1}{N} \sum_{i=1}^{N} \left| g_i^{MIR} - g_{med}^{MIR} \right| \qquad (M1)$$

for each moving window box of MIR images, where N is the number of pixels in the box, $g_i^{MIR}$ are their radiance signals, and a pixel is identified as a bright spot when:

$$g_i^{MIR} > g_{med}^{MIR} + \Delta g^{MIR} \qquad (M2)$$

where the threshold value $\Delta g^{MIR}$ is adapted via the median $g_{med}^{MIR}$ of the deviation $d^{MIR}$ and is proportional thereto:

$$\Delta g^{MIR} = \alpha^{MIR} \cdot d^{MIR} \qquad (M3)$$

with the parameter $\alpha^{MIR}$ selected under the condition that a combined MIR/VNIR-radiance ratio threshold value is used later for false-alarm rejection (step 1);

b) performing three successive processing procedures for each bright spot as obtained in the preceding step S1 of the co-registered multispectral scene, providing both fixed and adaptive thresholding operations with its radiometric data in the Thermal Infrared (TIR) channel in combination with a thresholding operation using a ratio of the radiometric data in the MIR channel to the radiometric data in a Visible/Near Infrared (VNIR) channel (step S2), these combined procedures consisting of the following substeps:

b1) Substep SS2.1: A fixed thresholding in the TIR, requiring that the radiant temperature calculated from the system-corrected sensor data for all bright spots should be the radiance corresponding to a threshold temperature, in order to eliminate cloud pixels;

b2) Substep SS2.2: An adaptive MIR/VNIR ratio threshold $thres_{MIR/VNIR}$ is applied to all remaining bright spots, resulting in the filtering out of all bright spots with a MIR/VNIR channel radiance ratio of less than $thres_{MIR/VNIR}$ as false alarms;

b3) Substep SS2.3: An adaptive TIR thresholding operation is applied to all remaining bright spots in a moving window procedure by an adaptive TIR thresholding, rejecting fire-free false alarm pixels with a TIR radiance below a threshold, determined by calculating for each moving window box of the TIR image the median $g_{med}^{TIR}$ and the deviation

$$d^{TIR} = \frac{1}{N} \sum_{i=1}^{N} \left| g_i^{TIR} - g_{med}^{TIR} \right| \qquad (T1)$$

where N is the number of pixels in the box, $g_i^{TIR}$ are their radiance signals, and a pixel is identified as a bright spot, if

$$g_i^{TIR} > g_{med}^{TIR} + \Delta g^{TIR} \qquad (T2)$$

where the threshold value $\Delta g^{TIR}$ via the median is chosen so as to avoid additional rejection of small hot target objects.

7. Method according to one of the preceding claims, **characterised in that** an intensity of the hot targets is obtained by estimating the radiant power from the signal of the MIR channel.

8. Method according to one of the preceding claims, **characterised in that** the effective temperature and the effective area of the hot targets are determined, with a radiant power of the hot targets being calculated from these values.

**9.** Satellite for detecting hot targets, comprising at least one sensor for detecting various spectral channels in the IR-spectrum, an on-board navigation system which is used to detect the positional and orientational data of the satellite, an evaluation unit (3) and a transmission unit for transmitting data to a receiving station which is located on Earth, **characterised in that** a system correction can be carried out by the evaluation unit (3) for the data acquired in the various spectral channels by means of radiometric and geometric calibration files stored on the satellite, the system-corrected data is available to the evaluation unit (3), in which hot targets are detectable on board by means of multi-channel thresholding and can be georeferenced by means of the data of the on-board navigation system (4) and the geometric calibration files, the georeferenced acquired hot targets being stored temporarily on the satellite in the mass memory (6) and transmitted to Earth in sequence by means of the transmission unit (7) in the form of modulated HF-signals.

**Revendications**

**1.** Procédé pour identifier des points chauds sur la terre, au moyen d'au moins un satellite, le satellite comportant au moins un capteur de détection de différents canaux spectraux dans le spectre d'absorption infrarouge, un système de navigation embarqué pour la détection des données de position et d'orientation du satellite ainsi qu'une unité d'émission pour la transmission des données aux unités de réception se trouvant sur la terre, **caractérisé par** les étapes de procédé suivantes :

a) réalisation d'une correction par le système des données acquises dans les différents canaux spectraux au moyen de fichiers de calibrage géométrique et radiométrique enregistrés sur le satellite,
b) détection des points chauds à bord dans un procédé de formation de valeur seuil à plusieurs canaux,
c) géoréférencement des points chauds détectés au moyen des données de position et d'orientation du satellite et des fichiers de calibrage géométrique,
d) enregistrement temporaire des points chauds détectés et géoréférencés sur le satellite,
e) transmission des points enregistrés temporairement au moyen de l'unité d'émission et
f) réception, démodulation, décodage et représentation graphique des points transmises dans au moins une unité de réception qui réalise l'intégration des longueurs et largeurs géographiques du site instantané de cette/ces unité(s) dans la représentation graphique des points chauds.

**2.** Procédé selon la revendication 1, **caractérisé en ce qu'**au moins des données sont détectées dans les bandes spectrales MIR, TIR et VNIR.

**3.** Procédé selon la revendication 2, comportant au moins :

a) un canal MIR dans le domaine spectral compris entre 3 et 5 $\mu$m,
b) un canal TIR dans le domaine spectral compris entre 8 et 13 $\mu$m,
c) un canal VNIR dans le domaine spectral compris entre 0,4 et 1 $\mu$m.

**4.** Procédé selon la revendication 3, comportant au moins :

a) un canal MIR dans le domaine spectral compris entre 3,5 et 4,2 $\mu$m,
b) un canal TIR dans le domaine spectral compris entre 8,5 et 9,3 $\mu$m,
c) un canal VNIR dans le domaine spectral compris entre 0,5 et 0,7 $\mu$m.

**5.** Procédé selon l'une quelconque des revendications précédentes, **caractérisé en ce qu'**un dateur automatique de détection est associé aux points chauds détectés.

**6.** Procédé selon l'une quelconque des revendications précédentes, **caractérisé en ce que** la détection des points chauds comporte l'application des étapes suivantes sur des données d'image numériques qui contiennent des cibles potentiellement chaudes :

a) détection des endroits clairs par une formation de valeur seuil adaptative dans l'infrarouge moyen (MIR), étant rejetés les pixels sans éclat avec le rayonnement MIR spécifique au-dessous de la valeur seuil selon un algorithme de fenêtre à ondes progressives pour la détection d'endroits clairs pour les données d'image de canal MIR par calcul de la médiane $g_{med}^{MIR}$ et de la différence

$$d^{MIR} = \frac{1}{N} \sum_{i=1}^{N} \left| g_i^{MIR} - g_{med}^{MIR} \right| \qquad (M1)$$

pour chaque boîte de fenêtre à ondes progressives des images MIR, N étant le nombre de pixels dans la boîte, $g_i^{MIR}$ leurs signaux de rayonnement et un pixel étant identifié commue un endroit clair,

$$g_i^{MIR} > g_{med}^{MIR} + \Delta g^{MIR} \qquad (M2)$$

la valeur seuil $\Delta g^{MIR}$ étant adaptée au-dessus de la médiane $g_{med}^{MIR}$ à la différence $d^{MIR}$ et étant proportionnelle à celle-ci :

$$\Delta g^{MIR} = \propto^{MIR} . d^{MIR} \qquad (M3)$$

avec le paramètre $\alpha^{MIR}$ choisi à la condition qu'une valeur seuil de rapport de rayonnement MIR/VNIR combinée soit utilisée ultérieurement pour un rejet de fausse alarme (étape 1) ;

b) trois procédures de traitement consécutives qui sont réalisées pour chaque endroit clair comme il est obtenu dans l'étape précédente S1 de la scène multispectrale coenregistrée, aussi bien des opérations de formation de valeur seuil fixes qu'adaptatives étant prévues avec leurs données radiométriques dans le canal de l'infrarouge thermique (TIR) en combinaison avec une opération de valeur seuil en utilisant un rapport entre les données radiométriques dans le canal MIR et les données radiométriques dans un canal de l'infrarouge visible/proche (VNIR) (étape S2), ces procédures combinées se composant des sous-étapes suivantes :

b1) sous-étape SS2.1 : une formation de valeur seuil fixe dans TIR, étant exigé que la température de rayonnement calculée à partir des données de capteur corrigées par le système pour tous les endroits clairs soit le rayonnement correspondant à une température de valeur seuil afin de désactiver des pixels de nuage;

b2) sous-étape SS2.2 : une valeur seuil de rapport MIR/VNIR adaptative $thres_{MIR/VNIR}$ est appliquée à tous les endroits clairs restants, ce qui mène à ce que tous les endroits clairs avec un rapport de rayonnement de canal MIR/VNIR plus petit que $thres_{MIR/VNIR}$, soient filtrés comme fausse alarme ;

b3) sous-étape SS2.3 : à une opération de valeur seuil TIR adaptative étant soumis tous les endroits clairs restants dans une procédure de fenêtre à ondes progressives par une formation de valeur seuil TIR adaptative, des pixels de fausse alarme sans éclat étant rejetés avec le rayonnement TIR au-dessous d'une valeur seuil, déterminée par le calcul de la médiane $g_{med}^{TIR}$ et de la différence

$$d^{TIR} = \frac{1}{N} \sum_{i=1}^{N} \left| g_i^{TIR} - g_{med}^{TIR} \right| \qquad (T1)$$

pour chaque boîte de fenêtre à ondes progressives de l'image TIR, N étant le nombre de pixels dans la boîte, $g_i^{TIR}$ leurs signaux de rayonnement et un pixel étant identifié comme un endroit clair, si

$$g_i^{TIR} > g_{med}^{TIR} + \Delta g^{TIR} \qquad (T2)$$

la valeur seuil $\Delta g^{TIR}$ étant choisie au-dessus de la médiane de sorte qu'un rejet supplémentaire de petites cibles chaudes soit évité.

**7.** Procédé selon l'une quelconque des revendications précédentes, **caractérisé en ce que** l'intensité des points chauds est obtenue en estimant la puissance de rayonnement du signal du canal MIR.

**8.** Procédé selon l'une quelconque des revendications précédentes, **caractérisé en ce que** la température effective et la surface effective des points chauds sont déterminées, une puissance de rayonnement des points chauds étant calculée à partir de ces valeurs.

**9.** Satellite pour identifier des points chauds, comportant au moins un capteur de détection de différents canaux spectraux dans le spectre d'absorption infrarouge, un système de navigation embarqué pour la détection des données de position et d'orientation du satellite, une unité d'évaluation (3) ainsi qu'une unité d'émission pour la transmission des données à un poste de réception se trouvant sur la terre,
**caractérisé en ce que**
pour les données détectées dans les différents canaux spectraux, une correction par le système de l'unité d'évaluation (3) peut être réalisée à l'aide de fichiers de calibrage géométrique et radiométrique enregistrés sur le satellite, les données corrigées par le système de l'unité d'évaluation sont disponibles, dans laquelle des points chauds peuvent être détectés à bord au moyen d'un procédé de formation de valeur seuil'à plusieurs canaux et peuvent être géoréférencés au moyen des données du système de navigation embarqué (4) et des fichiers de calibrage géométrique, les points chauds détectés et géoréférencés étant temporairement enregistrés sur le satellite dans la mémoire de masse (6) et étant transmis les uns après les autres au moyen de l'unité d'émission (7) comme signal HF modulé à la terre.

Fig. 1

EP 1 817 613 B1

Fig. 2

EP 1 817 613 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5602543 A
- DE 19840873 A1
- EP 0892286 A1
- US 20020026431 A
- FR 2679779 A

### In der Beschreibung aufgeführte Nicht-Patentliteratur

- **Zhukov et al.** BIRD Detection and Analysis of High-temperature Events: First Results. *proc. SPIE,* 2003, vol. 4886, 160-171